(19) Europäisches Patentamt
European Patent Office
Office européen des brevets

(11) **EP 4 166 695 A1**

(12) **DEMANDE DE BREVET EUROPEEN**

(43) Date de publication:
**19.04.2023** Bulletin 2023/16

(21) Numéro de dépôt: **22213707.7**

(22) Date de dépôt: **12.12.2016**

(51) Classification Internationale des Brevets (IPC):
**C25D 7/00** *(2006.01)* **C25D 3/56** *(2006.01)*
**C25D 5/50** *(2006.01)*

(52) Classification Coopérative des Brevets (CPC):
**C25D 3/562; C25D 5/50; C25D 7/005**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.12.2015 EP 15201068**

(62) Numéro(s) de document de la (des) demande(s) initiale(s) en application de l'article 76 CBE:
**16819298.7 / 3 390 696**

(71) Demandeur: **ROLEX SA**
**1211 Genève 26 (CH)**

(72) Inventeurs:
• **AUDREN, Ann-Kathrin**
**1224 Chêne-Bougeries (CH)**

• **FAVEZ, Denis**
**1218 Le Grand-Saconnex (CH)**
• **MANARANCHE-BOYES, Claire**
**2503 Bienne (CH)**

(74) Mandataire: **Moinas & Savoye SARL**
**27, rue de la Croix-d'Or**
**1204 Genève (CH)**

Remarques:
Cette demande a été déposée le 15-12-2022 comme demande divisionnaire de la demande mentionnée sous le code INID 62.

(54) **PROCÉDÉ DE FABRICATION D'UN COMPOSANT HORLOGER**

(57) Procédé de fabrication d'un composant horloger, caractérisé en ce qu'il comprend une étape d'électrodéposition consistant à déposer un alliage sur un substrat, formant au moins un flanc du composant horloger d'épaisseur supérieure ou égale à 50 microns, cette étape d'électrodéposition étant réalisée à partir d'un bain électrolytique comprenant un composé contenant du nickel et un deuxième composé sans nickel, en proportions telles que l'alliage obtenu comprend une teneur en poids de nickel comprise entre 91% et 99.8% inclus et entre 0.2 et 6% inclus, voire entre 0.2 et 4% inclus en poids d'un deuxième élément provenant du deuxième composé.

Fig. 1

**EP 4 166 695 A1**

**Description**

La présente invention concerne un procédé de fabrication d'un composant par électrodéposition. L'invention porte aussi sur l'utilisation d'un tel procédé pour la fabrication de composants horlogers, notamment d'un mouvement horloger. Elle porte aussi sur un composant horloger en tant que tel, ainsi que sur un mouvement horloger et une pièce d'horlogerie intégrant un tel composant horloger.

Il est connu d'utiliser le nickel pour fabriquer un composant horloger par électroformage. Notamment, le nickel est utilisé pour fabriquer des ressorts, du fait de ses bonnes propriétés élastiques. Un dépôt de nickel pur, solution courante dans le domaine de l'électrodéposition, requiert un électrolyte aussi propre que possible, exempt de particules solides, de contaminations métalliques ou d'excès de composants organiques. L'électroformage du nickel obéit à des paramètres multiples et complexes. L'homme du métier doit notamment maîtriser la composition du bain électrolytique, son homogénéité dans le temps ainsi que les températures et densités de courant lors de l'électrodéposition, pour obtenir les bonnes propriétés mécaniques du composant final en fonction de l'épaisseur désirée. Une problématique réside notamment dans la maîtrise des contraintes induites dans le matériau déposé par le procédé d'électrodéposition. On remarque par ailleurs que plus l'épaisseur de matériau déposé est importante, plus l'influence de ces contraintes internes est importante, par exemple au niveau de la résistance à la fissuration de la pièce ainsi produite.

De plus, la réponse aux sollicitations mécaniques du composant obtenu par un tel procédé évolue dans le temps, notamment en raison de la relaxation de contraintes. Par exemple, on note une perte de force importante d'un ressort ainsi obtenu lorsqu'il est constamment soumis à une déformation élastique. De même, un tel composant rencontre des problèmes de fluage avec le temps.

Naturellement, ces phénomènes réduisent fortement la fiabilité d'un tel composant utilisé dans un mouvement horloger.

Pour réduire ces inconvénients, le document US20140269228 utilise un alliage de nickel comportant entre 10 et 30 % en poids de Fer, ainsi qu'une proportion comprise entre 0.005 et 0.2% en poids de Soufre. Avec un tel alliage, le fer s'immisce en solution solide de manière aléatoire dans le réseau cristallin du nickel, provoquant une distorsion de la maille cristalline qui permet d'obtenir un composant au comportement amélioré. Toutefois, cette solution présente l'inconvénient d'introduire un élément ferromagnétique dans l'alliage et d'augmenter la susceptibilité magnétique des pièces ainsi réalisées, ce qui est déconseillé pour une application horlogère.

D'autres alliages de nickel sont aussi utilisés dans l'état de la technique pour fabriquer des composants par électroformage, par exemple un alliage de Nickel-Phosphore Ni-P. Il existe plusieurs bains commerciaux de Ni-P, qui comprennent par exemple du sulfamate de nickel, du sulfate de nickel et du chlorure de nickel, de l'acide borique, et du phosphore introduit sous forme d'acide phosphorique ou d'acide phosphoreux. Ces bains permettent d'obtenir un composant comprenant une quantité importante en poids de phosphore. Toutefois, les alliages Ni-P connus et le procédé d'électrodéposition associé ne donnent pas entière satisfaction pour les raisons mentionnées plus haut.

Ainsi, la présente invention a pour objet de proposer une solution améliorée de fabrication d'un composant par électroformage.

Plus précisément, l'invention a pour objet une solution de fabrication d'un composant par électroformage qui permet d'améliorer la performance du composant obtenu vis-à-vis des phénomènes de fluage et de relaxation constatés dans l'état de la technique, particulièrement pour obtenir un composant aux propriétés élastiques stables dans le temps, même si une contrainte lui est appliquée de manière permanente ou quasi-permanente. Un objet de l'invention est ainsi d'obtenir un composant fiable adapté à une application horlogère.

À cet effet, l'invention repose sur un procédé de fabrication d'un composant horloger, caractérisé en ce qu'il comprend une étape d'électrodéposition consistant à déposer un alliage sur un substrat, formant au moins un flanc du composant horloger d'épaisseur supérieure ou égale à 50 microns, cette étape d'électrodéposition étant réalisée à partir d'un bain électrolytique comprenant un composé contenant du nickel et un deuxième composé sans nickel, comprenant notamment du phosphore ou un élément parmi le Bore B, le Bismuth Bi, le Carbone C, le Chlore Cl, le Calcium Ca, l'Indium In, le Manganèse Mn, l'étain Sn ou le Zirconium Zr, en proportions telles que l'alliage obtenu comprend une teneur en poids de nickel comprise entre 91% et 99.8% inclus et entre 0.2 et 6% inclus, voire entre 0.2 et 4% inclus en poids d'un deuxième élément provenant du deuxième composé. En variante, l'alliage obtenu comprend une teneur en poids de nickel comprise entre 94% et 99.8% inclus ou entre 96% et 99.8% inclus.

Le bain électrolytique peut comprendre un troisième composé sans nickel comprenant un élément choisi parmi le Fer Fe, le Chrome Cr, le Cobalt Co, le Cuivre Cu, le Manganèse Mn, le Palladium Pd, le Platine Pt, le Zinc Zn.

Le bain électrolytique peut être tel qu'il permet de former un alliage consistant en du nickel, un deuxième élément provenant dudit deuxième composé et éventuellement un troisième élément provenant d'un troisième composé sans nickel.

Le second composé du bain électrolytique peut contenir du phosphore P.

Le bain électrolytique peut comprendre au moins un brillanteur en quantité supérieure ou égale à 1 g/l.

Le bain électrolytique peut comprendre de la saccharine, notamment entre 3 et 8 g/l inclus de saccharine.

La saccharine peut être l'unique brillanteur du bain électrolytique.

D'autre part, l'étape d'électrodéposition peut comprendre :

- l'application d'une température de bain électrolytique comprise entre 40°C et 60°C, ou entre 45°C et 55°C, ou sensiblement égale à 50°C, et/ou
- le choix d'un pH de la solution entre 1.5 et 4.1, ou entre 1.5 et 3.5, ou sensiblement égal à 3.0, et/ou
- une densité de courant appliquée entre 1.0 et 3.5 A/cm2, ou entre 2.0 et 3.5 A/cm2, ou sensiblement égale à 2.7 A/cm2.

Le procédé de fabrication d'un composant horloger peut comprendre une étape de traitement thermique du composant obtenu après l'étape d'électrodéposition, à une température comprise entre 150 et 350°C inclus, ou entre 200 et 320°C inclus, ou entre 220 et 270°C inclus, de sorte à améliorer la performance du composant obtenu vis-à-vis des phénomènes de fluage et/ou de relaxation.

L'étape de traitement thermique peut être réalisée à une température supérieure ou égale à 300°C pendant une durée inférieure ou égale à 30 minutes, ou à une température comprise entre 240°C et 260°C, voire entre 200°C et 270°C, pendant une durée supérieure ou égale à une heure et inférieure ou égale à deux heures

Le procédé de fabrication d'un composant horloger peut permettre de fabriquer un composant horloger parmi un ressort, un levier-ressort, un sautoir, une ancre, une roue, un râteau, un balancier, une came, un engrenage ou un pont.

L'invention porte aussi sur un composant horloger électroformé, caractérisé en ce qu'il comprend un alliage d'au moins deux éléments distincts, le premier élément étant le nickel, selon une proportion en poids comprise entre 91% et 99.8% inclus, et le deuxième élément, choisi parmi le phosphore P, le Bore B, le Bismuth Bi, le Carbone C, le Chlore Cl, le Calcium Ca, l'Indium In, le Manganèse Mn, l'étain Sn ou le Zirconium Zr, se trouvant dans une proportion en poids comprise entre 0.2 et 6% inclus, voire entre 0.2 et 4% inclus et caractérisé en ce que l'alliage comprend au moins un flanc d'épaisseur supérieure ou égale à 50 microns.

Le composant horloger électroformé peut comprendre un alliage d'au moins deux éléments distincts, le premier élément étant le nickel, selon une proportion en poids comprise entre 91% et 99.8% inclus, et le deuxième élément, choisi parmi le Bore B, le Bismuth Bi, le Calcium Ca, l'Indium In, le Manganèse Mn, l'étain Sn ou le Zirconium Zr, se trouvant dans une proportion en poids comprise entre 0.2 et 6% inclus, voire entre 0.2 et 4% inclus, et l'alliage comprenant au moins un flanc d'épaisseur supérieure ou égale à 50 microns et occupant toute l'épaisseur du composant horloger.

Le composant horloger électroformé peut comprendre un troisième élément, différent des deux premiers, sélectionné parmi le Fer Fe, le Chrome Cr, le Cobalt Co, le Cuivre Cu, le Manganèse Mn, le Palladium Pd, le Platine Pt, le Zinc Zn.

Le composant horloger électroformé peut comprendre un alliage consistant en du nickel, ledit deuxième élément, notamment du phosphore P, et éventuellement un troisième élément.

Ledit alliage peut ne pas comprendre de Bore et/ou de Thallium.

Le composant horloger électroformé peut être un ressort, un levier-ressort, un sautoir, une ancre, une roue, un râteau, un balancier, une came, un engrenage, ou un pont.

L'invention porte aussi sur un mouvement horloger ou sous-partie de pièce d'horlogerie, caractérisé en ce qu'il comprend un composant horloger tel que décrit ci-dessus.

L'invention porte aussi sur une pièce d'horlogerie, notamment une montre, caractérisée en ce qu'elle comprend un composant horloger tel que décrit ci-dessus.

L'invention repose aussi sur un procédé de fabrication d'un composant horloger, caractérisé en ce qu'il comprend une étape d'électrodéposition consistant à déposer un alliage sur un substrat, formant au moins un flanc du composant horloger d'épaisseur supérieure ou égale à 50 microns, cette étape d'électrodéposition étant réalisée à partir d'un bain électrolytique comprenant un composé contenant du nickel et un deuxième composé sans nickel, contenant un élément choisi parmi le Bore B, le Bismuth Bi, le Calcium Ca, l'Indium In, le Manganèse Mn, l'étain Sn ou le Zirconium Zr, en proportions telles que l'alliage obtenu comprend une teneur en poids de nickel comprise entre 91% et 99.8% inclus et entre 0.2 et 6% inclus, voire entre 0.2 et 4% inclus, en poids d'un deuxième élément provenant du deuxième composé et en ce qu'il comprend une étape de traitement thermique du composant obtenu après l'étape d'électrodéposition, à une température comprise entre 150 et 350°C inclus, ou entre 200 et 320°C inclus, ou entre 220 et 270°C inclus, de sorte à améliorer la performance du composant obtenu vis-à-vis des phénomènes de fluage et/ou de relaxation, et caractérisé en ce que l'étape d'électrodéposition comprend :

- l'application d'une température de bain électrolytique comprise entre 40°C et 60°C, ou entre 45°C et 55°C, ou sensiblement égale à 50°C, et
- le choix d'un pH de la solution entre 1.5 et 4.1, ou entre 1.5 et 3.5, ou sensiblement égal à 3.0, et
- une densité de courant appliquée entre 1.0 et 3.5 A/dm2, ou entre 2.0 et 3.5 A/dm2, ou sensiblement égale à 2.7 A/dm2.

Ces objets, caractéristiques et avantages de la présente invention seront exposés en détail dans la description suivante de modes de réalisation particuliers faits à titre non-limitatif en relation avec les figures jointes parmi lesquelles :

La figure 1 illustre des courbes d'évolution sur une période de cinq heures de la perte de force de composants de nickel ou de nickel phosphore Ni-P électroformés ayant subi différents traitements thermiques.

La figure 2 illustre l'effet de la saccharine dans une étape d'électrodéposition d'un procédé de fabrication d'un composant horloger selon un mode de réalisation de l'invention.

La figure 3 représente les résultats des essais de flexion obtenus pour différents traitement thermiques d'un composant de nickel phosphore Ni-P électroformé selon le mode de réalisation de l'invention.

Le mode de réalisation de l'invention porte d'abord sur un composant épais, c'est-à-dire d'épaisseur supérieure ou égale à 50 microns, ou dont une portion présente une épaisseur supérieure ou égale à 50 microns. Pour une telle épaisseur, il est impossible d'ignorer les conséquences des éventuelles contraintes internes au composant, qui induisent des fissures, soit lors de la fabrication du composant, soit lorsque son utilisation le soumet à une contrainte mécanique, comme dans le cas d'un ressort de mouvement horloger. En remarque, ce problème technique est au contraire négligeable pour des épaisseurs inférieures pour lesquelles les contraintes internes ont peu d'effet.

D'autre part, le mode de réalisation préféré de l'invention repose sur l'utilisation d'un alliage à base de nickel et de phosphore Ni-P, avec une faible proportion de phosphore, comme cela sera détaillé par la suite. En remarque, toutes les proportions mentionnées dans ce document pour les éléments utilisés dans un alliage sont des pourcentages en poids.

Le mode de réalisation de l'invention comprend donc la mise en œuvre d'un procédé de fabrication d'un composant à base de Ni-P par électroformage. L'électroformage en tant que tel est réalisé avec des dispositifs connus de l'état de la technique, sur un substrat éventuellement recouvert d'une couche formant l'électrode, par exemple par une technique de type LIGA, de photolithographie et dépôt galvanique. L'alliage ainsi déposé est ensuite détaché du substrat pour former le composant final. Selon le mode de réalisation de l'invention, le procédé de fabrication d'un composant comprend donc au moins une étape d'électrodéposition consistant à former une couche d'alliage épaisse, d'un seul tenant. En remarque, il n'est pas exclu de procéder ensuite à d'autres étapes d'électrodéposition pour former au moins une autre couche, et par exemple former un composant multicouches, ou de fixation par tout moyen d'une autre sous-partie du composant à la couche épaisse électrodéposée mentionnée ci-dessus.

Pour cela, le procédé selon le mode de réalisation utilise un bain électrolytique qui s'éloigne de la composition habituelle d'un bain de nickel pur ou de nickel-phosphore de l'état de la technique. Ce bain selon le mode de réalisation de l'invention comprend ainsi notamment un brillanteur, et plus particulièrement de la saccharine, qui peut par exemple être ajouté à des composants conventionnels tels que ceux présents dans un bain de Ni-P. La teneur totale de ces différents éléments du bain électrolytique selon le mode de réalisation de l'invention est telle que la quantité de phosphore finalement obtenue dans le composant électrodéposé est inférieure ou égale à 6%, de manière à éviter le domaine amorphe. Cette proportion peut en variante être inférieure ou égale à 4%. Elle est dans tous les cas de préférence supérieure ou égale à 0.2%. Le mode de réalisation de l'invention combine ainsi une faible quantité de phosphore dans un composant électroformé en alliage Ni-P avec une forte épaisseur, ce qui va à l'encontre des préjugés de l'homme du métier pour lequel il était admis qu'un tel composant rencontrerait inévitablement des problèmes de fissuration et ne serait pas exploitable. En effet, une faible teneur en phosphore aboutit à un alliage cristallin, magnétique, qui est soumis à de telles contraintes internes en traction lorsqu'il est déposé de manière conventionnelle que les épaisseurs sont généralement faibles. Des dépôts plus épais ainsi obtenus présentent un important risque de fissuration.

À titre d'exemple de réalisation de l'invention, un bain électrolytique utilisé peut avoir la composition suivante : 90 g/l de Ni et 6 g/l de Cl, 5 g/l de B, 0.2 g/l de phosphore, et 15 ml/l d'un brillanteur commercial Niron84. Ce bain permet d'obtenir, moyennant un dépôt à 50°C durant 2 heures et sous une densité de courant de 2.7 A/dm2, un composant comprenant 3.9% en poids de phosphore d'une épaisseur de 60 microns.

Un autre exemple de réalisation de l'invention utilise un bain électrolytique composé de 90 g/l de Ni et 20 g/l de Cl, 5 g/l de B, 0.2 g/l de phosphore, 16 ml/l d'un brillanteur commercial Niron84 et 2 g/l de saccharine. Ce bain permet d'obtenir, moyennant un dépôt à 50°C durant 4 heures et sous une densité de courant de 2.7 A/dm2, un composant comprenant 0.22% en poids de phosphore d'une épaisseur de 100 microns.

Selon un autre exemple de réalisation de l'invention, un bain électrolytique utilisé peut avoir la composition suivante : 105 g/l de Ni et 20 g/l de Cl, 5 g/l de B, 6 g/l de phosphore, et 1.5 g/l de saccharine. Ce bain permet d'obtenir, moyennant un dépôt à 60°C durant 18 heures et sous une densité de courant de 1.5 A/dm2, un composant comprenant 2.4% en poids de phosphore d'une épaisseur de 300 microns.

Un autre exemple de réalisation de l'invention utilise un bain électrolytique composé de 90 g/l de Ni et 20 g/l de Cl, 5 g/l de B, 3.2 g/l de phosphore, 5 g/l de saccharine. Ce bain permet d'obtenir, moyennant un dépôt à 50°C durant 4 heures et sous une densité de courant de 2.7 A/dm2, un composant comprenant 1.2% en poids de phosphore d'une épaisseur de 100 microns.

Selon un autre exemple de réalisation de l'invention, un bain électrolytique utilisé peut avoir la composition suivante : 90 g/l de Ni et 20 g/l de Cl, 5 g/l de B, 8 g/l de phosphore, et 6 g/l de saccharine. Ce bain permet d'obtenir, moyennant un dépôt à 50°C durant 12 heures et sous une densité de courant de 2.7 A/dm2, un composant comprenant 1.8% en poids de phosphore d'une épaisseur de 350 microns.

De telles électrodépositions permettent de plus d'obtenir des épaisseurs déposées très importantes, par exemple jusqu'à 700 microns.

Les exemples précédents permettent finalement d'obtenir un alliage binaire de Ni-P. En variante, les exemples de réalisation suivants permettent d'obtenir un alliage ternaire à base de nickel.

Un exemple de réalisation utilise un bain électrolytique composé de 90 g/l de Ni et de 20 g/l de Cl, 5 g/l de B, 8 g/l de phosphore, 1 g/l de cobalt et 6.5 g/l de saccharine. Ce bain permet d'obtenir, moyennant un dépôt à 60°C durant 48 heures et sous une densité de courant de 1.5 A/dm2 un composant cristallin comprenant 1.8% en poids de phosphore et 5.8% en poids de cobalt, d'épaisseur environ 70 microns.

Un autre exemple de réalisation utilise un bain électrolytique composé de 90 g/l de Ni et de 20 g/l de Cl, 5 g/l de B, 8 g/l de phosphore, 1 g/l de cobalt et 8 g/l de saccharine. Ce bain permet d'obtenir, moyennant un dépôt à 60°C durant 4 heures et sous une densité de courant de 1.5 A/dm2 un composant cristallin comprenant 1.6% en poids de phosphore et 6.3% en poids de cobalt, d'épaisseur environ 54 microns.

Un autre exemple de réalisation utilise un bain électrolytique composé de 90 g/l de Ni et de 20 g/l de Cl, 5 g/l de B, 8 g/l de phosphore, 1 g/l de cobalt et 10 g/l de saccharine. Ce bain permet d'obtenir, moyennant un dépôt à 60°C durant 4 heures et sous une densité de courant de 1.5 A/dm2 un composant cristallin comprenant 1.4% en poids de phosphore et 5.5% en poids de cobalt, d'épaisseur environ 51 microns.

En remarque, une réalisation utilisant un bain électrolytique composé de 90 g/l de Ni et de 6 g/l de Cl, 5 g/l de B, 2.25 g/l de phosphore, 10 ml/l d'un brillanteur commercial Niron84 a été tentée. Ce bain permet d'obtenir, moyennant un dépôt à 60°C durant 2 heures et sous une densité de courant de 2.7 A/dm2, un composant amorphe comprenant 8% en poids de phosphore, d'épaisseur environ 49 microns. Il est apparu que cette teneur en phosphore donne un résultat avec une matière amorphe, qui ne résiste pas au fluage. Ainsi, pour éviter cet inconvénient, une solution avantageuse consiste à limiter la teneur en poids de phosphore à une valeur inférieure ou égale à 6 %.

Selon le mode de réalisation de l'invention, le bain électrolytique comprend donc au moins un brillanteur, de préférence au moins 1 g/l de brillanteur, pour limiter les contraintes internes et éviter la fissuration du composant. Avantageusement, le brillanteur est de la saccharine. Avantageusement, une quantité de saccharine entre 3 et 8 g/l est présente dans le bain électrolytique. L'ajout de saccharine permet de passer d'un état de contraintes internes en traction à un état de contraintes internes en compression, nettement plus favorables au maintien des propriétés du matériau électroformé. En remarque, la saccharine n'est pas utilisée avec un alliage de nickel-phosphore dans l'état de la technique car elle inhibe la déposition du phosphore et la limite à une faible proportion, alors que les approches de l'état de la technique consistent à rechercher une proportion importante de phosphore. De plus, la teneur du bain en saccharine doit être suivie avec précision car, en tant qu'additif organique, elle se dégrade et rend le bain d'électrodéposition instable, ce qui représente un argument supplémentaire pour ne pas l'utiliser dans l'état de la technique. Au contraire, dans le mode de réalisation de l'invention, la saccharine est même utilisée seule brillanteur, c'est à dire que tout autre brillanteur de base est complètement retiré du bain au profit de la saccharine.

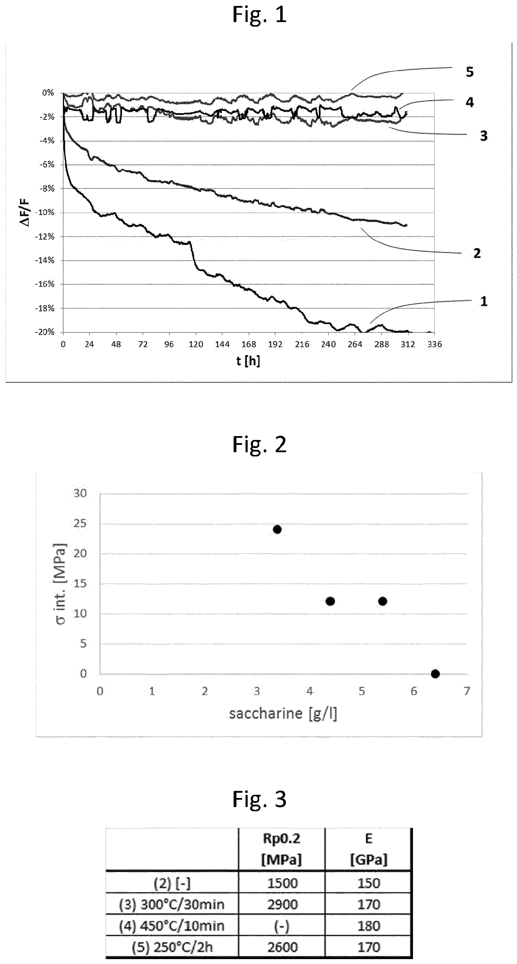

La figure 2 illustre l'effet de la saccharine. Elle représente en effet les contraintes internes obtenues dans différents composants électroformés à partir d'un bain électrolytique tel que détaillé ci-dessus pour plusieurs proportions de saccharine, moyennant un dépôt à 50°C avec un pH compris entre 1.5 et 3.1 et sous une densité de courant de 2.7 A/dm2.

Au niveau opérationnel, les contraintes internes sont mesurées au moyen d'une jauge de contrainte à lames, plus précisément à partir de languettes de cuivre comportant deux parties dont l'une est revêtue par électrodéposition. La mesure de l'écartement entre les deux parties de la languette, avec et sans revêtement, permet d'en déduire la contrainte interne du revêtement.

Au niveau théorique, la contrainte S (en PSI) se calcule par :

$$S = \frac{UKM}{3T}$$

où

U représente l'écartement mesuré sur l'équipement,
K représente la constante liée au type de lamelle utilisé,
M représente le module d'élasticité du dépôt relativement à celui du substrat, et
T représente l'épaisseur déposée.

Une contrainte positive indique une mise en traction de la surface, une contrainte négative une compression de la surface. En cas de mise en traction, le risque de fissure est important.

Dans tous les cas, lorsque la composition du bain électrolytique a été optimisée comme décrit ci-dessus, l'électrodéposition doit aussi avantageusement être menée dans des conditions favorables. Pour cela, il apparaît que ces conditions favorables sont atteintes pour une température comprise en 40°C et 60°C, de préférence entre 45°C et 55°C, et idéalement sensiblement égale à 50°C. Elles sont aussi atteintes pour un pH de la solution compris entre 1.5 et 4.1, de préférence entre 1.5 et 3.5, idéalement sensiblement égal à 3.0. Enfin, la densité de courant appliquée se trouve de préférence entre 1.0 et 3.5 A/dm2, voire même entre 2.0 et 3.5 A/dm2, idéalement sensiblement égale à 2.7 A/dm2.

En remarque, lors de la mise en œuvre de ces procédés d'électrodéposition, il y a en général inévitablement un dépôt d'impuretés. Ainsi, le composant obtenu peut comprendre des faibles quantités de fer et de cuivre. Il contient également des traces de bore, de carbone et de soufre. Les proportions retenues pour définir le produit final obtenu font parfois abstraction de ces impuretés.

Selon une variante avantageuse du mode de réalisation de l'invention, le procédé de fabrication d'un composant électroformé comprend une étape supplémentaire de traitement thermique, qui suit l'étape d'électrodéposition.

Avantageusement, ce traitement thermique est réalisé à une température relativement faible par rapport aux traitements thermiques habituellement perçus comme utiles dans le domaine de fabrication de composants par électroformage. Notamment, un tel traitement thermique est de préférence réalisé à une température inférieure ou égale à 370 °C. Cette température peut être comprise entre 150 et 350 °C inclus, voire entre 200 et 320°C inclus, voire entre 220 et 270 °C.

Le tableau de la figure 3 illustre notamment l'augmentation de la limite élastique avec le traitement thermique. Il permet de comparer les résultats sans traitement thermique et avec des traitements thermiques de températures 450°C, 300°C et 250°C. Il ressort qu'une température de 450°C est par exemple trop élevée car elle induit un comportement fragile du composant par précipitation de la phase Ni$_3$P. Les deux essais à 250°C et 300°C sont satisfaisants.

La figure 1 illustre de même l'effet du traitement thermique sur la relaxation d'un composant électroformé selon le mode de réalisation avec et sans traitement thermique, sur une période de treize jours. La courbe 1 illustre le résultat obtenu avec un composant en nickel pur sans traitement thermique, selon l'état de la technique. On constate une perte de force d'environ 20% au bout de treize jours. La courbe 2 illustre le résultat obtenu avec un composant en nickel phosphore selon l'invention, sans traitement thermique. Elle correspond à la première ligne du tableau de la figure 3. Les courbes 3, 4, 5 illustrent les résultats obtenus pour respectivement des traitements thermiques à 300°C pendant 30 minutes, 450°C pendant 10 minutes, et 250°C pendant deux heures. Dans les trois cas, la perte de force est inférieure ou égale à 3% au bout de treize jours. On note que le meilleur résultat est atteint pour la température la plus faible, de 250°C. En remarque, ces trois courbes 3, 4, 5 correspondent respectivement aux trois dernières lignes du tableau de la figure 3. Plus généralement, le traitement thermique peut être réalisé à une température supérieure ou égale à 300°C pendant une durée inférieure ou égale à 30 minutes. En variante, il peut être réalisé à une température comprise entre 240°C et 260°C, voire entre 200°C et 270°C, pendant une durée supérieure ou égale à une heure et inférieure ou égale à deux heures. Naturellement, un compromis sera choisi entre la température et la durée de traitement thermique. Plus la température est élevée, moins la durée est longue.

Le mode de réalisation de l'invention a été décrit à partir d'un alliage Ni-P. En variantes de réalisation, le phosphore, utilisé dans le mode de réalisation préféré, peut être remplacé par l'un des éléments suivants : le Bore B, le Bismuth Bi, le Carbone C, le Chlore Cl, le Calcium Ca, l'Indium In, le Manganèse Mn, l'étain Sn ou le Zirconium Zr. En variante, il peut être remplacé par l'un des éléments suivants : le Bismuth Bi, le Carbone C, le Chlore Cl, le Calcium Ca, l'Indium In, le Manganèse Mn, l'étain Sn ou le Zirconium Zr.

Selon une autre variante de réalisation, l'alliage peut être formé de deux éléments ajoutés au nickel Ni, pour former un alliage à trois éléments. Le premier élément ajouté peut être le phosphore ou l'un des éléments listés ci-dessus, et le deuxième élément ajouté peut être parmi : le Fer (Fe), le Chrome (Cr), le Cobalt (Co), le Cuivre (Cu), le Manganèse (Mn), le Palladium (Pd), le Platine (Pt), le Zinc (Zn).

Enfin, selon d'autres variantes de réalisation, d'autres alliages peuvent être obtenus en remplaçant le nickel des alliages décrits précédemment par un autre métal, particulièrement du cuivre ou de l'aluminium. Dans tous les cas, le nickel, ou l'élément alternatif comme le cuivre et l'aluminium, seront en quantité importante dans le bain électrolytique et le composant obtenu, de préférence selon une proportion supérieure ou égale à 91%, voire supérieure ou égale à 94%, supérieure ou égale à 96%.

L'invention porte aussi sur le composant en tant que tel obtenu par le procédé de fabrication décrit précédemment. Ce composant, ou au moins la partie de ce composant réalisée en alliage tel que décrit précédemment, possède au moins un flanc d'un seul tenant d'une épaisseur supérieure ou égale à 50 microns réalisé en une étape d'électrodéposition d'une couche. Le composant peut ainsi comprendre des zones de moindre épaisseur. Le composant peut également comprendre une superposition, totale ou partielle, de couches obtenues selon le procédé de fabrication décrit précédemment. Le composant peut par ailleurs inclure au moins un deuxième composant tel qu'une pierre ou un doigt en rubis. Le composant peut également comprendre au moins une portion, notamment une portion fonctionnelle, réalisée dans un matériau distinct d'un alliage Ni-P.

Il comprend de plus un premier élément métallique comme du nickel, voire du cuivre ou de l'aluminium, en grande quantité, en proportion supérieure ou égale à 91%, et inférieure ou égale à 99.8%, et au moins un deuxième élément comme du phosphore, ou l'un des éléments alternatifs listés ci-dessus, en faible quantité, comprise entre 0.2 et 6% inclus, voire entre 0.2 et 4% inclus. L'alliage peut comprendre deux éléments, voire trois selon les variantes décrites ci-dessus. L'alliage peut naturellement comprendre de plus des impuretés, qu'on peut négliger par rapport aux autres éléments mentionnés. Ainsi, l'alliage mentionné peut consister en les deux ou trois éléments mentionnés, être donc binaire ou ternaire (on fait alors abstraction des éventuelles impuretés). En remarque, le composant obtenu, et notamment son alliage décrit précédemment, possède donc une forte épaisseur et ne peut pas être comparé à un simple revêtement de surface. Selon un mode de réalisation, l'alliage mentionné occupe toute l'épaisseur du composant. En variante, il n'occupe pas toute l'épaisseur du composant, ou sur une partie du composant seulement. Selon un autre exemple avantageux, l'alliage mentionné ne comprend pas de bore et/ou ne comprend pas de thallium.

Un tel composant est avantageusement utilisé dans un mouvement horloger, et dans une pièce d'horlogerie. Particulièrement, l'utilisation horlogère de composants électroformés épais en alliage de nickel-phosphore à faible taux de phosphore est particulièrement avantageuse, puisque ces composants s'avèrent particulièrement résistants au fluage. Cet avantage provient notamment du fait que ces composants ne comprennent pas ou peu de contrainte interne malgré leur grande épaisseur. Un tel composant peut aussi être utilisé pour toute autre sous-partie d'une pièce d'horlogerie, comme une boîte ou un fermoir de montre par exemple.

Notamment, le procédé de fabrication d'un composant tel que décrit précédemment peut avantageusement être utilisé pour la fabrication de composants horlogers tels que, à titre d'exemple illustratif et non limitatif, un ressort, un levier-ressort, un sautoir, une ancre, une roue, un râteau, un balancier, une came, un engrenage ou encore un pont. Un tel composant peut comprendre au moins deux niveaux distincts.

Enfin, l'invention porte aussi sur une pièce d'horlogerie, comme une montre, notamment une montre-bracelet, qui comprend un composant tel que décrit précédemment.

**Revendications**

1.   Procédé de fabrication d'un composant horloger, **caractérisé en ce qu'**il comprend une étape d'électrodéposition consistant à déposer un alliage sur un substrat, formant au moins un flanc du composant horloger d'épaisseur supérieure ou égale à 50 microns, cette étape d'électrodéposition étant réalisée à partir d'un bain électrolytique comprenant un composé contenant du nickel et un deuxième composé sans nickel, contenant un élément choisi parmi le Bore B, le Bismuth Bi, le Calcium Ca, l'Indium In, le Manganèse Mn, l'étain Sn ou le Zirconium Zr, en proportions telles que l'alliage obtenu comprend une teneur en poids de nickel comprise entre 91% et 99.8% inclus et entre 0.2 et 6% inclus, voire entre 0.2 et 4% inclus, en poids d'un deuxième élément provenant du deuxième composé et **en ce qu'**il comprend une étape de traitement thermique du composant obtenu après l'étape d'électrodéposition, à une température comprise entre 150 et 350°C inclus, ou entre 200 et 320°C inclus, ou entre 220 et 270°C inclus, de sorte à améliorer la performance du composant obtenu vis-à-vis des phénomènes de fluage et/ou de relaxation, et **caractérisé en ce que** l'étape d'électrodéposition comprend :

- l'application d'une température de bain électrolytique comprise entre 40°C et 60°C, ou entre 45°C et 55°C, ou sensiblement égale à 50°C, et
- le choix d'un pH de la solution entre 1.5 et 4.1, ou entre 1.5 et 3.5, ou sensiblement égal à 3.0, et
- une densité de courant appliquée entre 1.0 et 3.5 A/dm2, ou entre 2.0 et 3.5 A/dm2, ou sensiblement égale à 2.7 A/dm2.

2.   Procédé de fabrication d'un composant horloger selon la revendication précédente, **caractérisé en ce qu'**il comprend une étape de détachement de l'alliage déposé du substrat pour former le composant horloger, et **en ce qu'**il comprend optionnellement d'autres étapes d'électrodéposition pour former au moins une autre couche.

3.   Procédé de fabrication d'un composant horloger selon la revendication 1 ou 2, **caractérisé en ce que** le bain électrolytique comprend un troisième composé sans nickel comprenant un élément choisi parmi le Fer Fe, le Chrome Cr, le Cobalt Co, le Palladium Pd, le Platine Pt, le Cuivre Cu, le Manganèse Mn, le Zinc Zn.

4.   Procédé de fabrication d'un composant horloger selon l'une des revendications précédentes, **caractérisé en ce que** le bain électrolytique est tel qu'il permet de former un alliage consistant en du nickel, un deuxième élément provenant dudit deuxième composé et éventuellement un troisième élément provenant d'un troisième composé sans nickel.

5.   Procédé de fabrication d'un composant selon l'une des revendications précédentes, **caractérisé en ce que** le second composé du bain électrolytique contient du phosphore P.

6.   Procédé de fabrication d'un composant horloger selon l'une des revendications précédentes, **caractérisé en ce que** le bain électrolytique comprend au moins un brillanteur en quantité supérieure ou égale à 1 g/l.

**7.** Procédé de fabrication d'un composant horloger selon la revendication précédente, **caractérisé en ce que** le bain électrolytique comprend de la saccharine ou **en ce qu'**il comprend entre 3 et 8 g/l inclus de saccharine.

**8.** Procédé de fabrication d'un composant horloger selon la revendication précédente, **caractérisé en ce que** la saccharine est l'unique brillanteur du bain électrolytique.

**9.** Procédé de fabrication d'un composant horloger selon l'une des revendications précédentes, **caractérisé en ce que** l'étape de traitement thermique est réalisée à une température supérieure ou égale à 300°C pendant une durée inférieure ou égale à 30 minutes, ou à une température comprise entre 240°C et 260°C, voire entre 200°C et 270°C, pendant une durée supérieure ou égale à une heure et inférieure ou égale à deux heures

**10.** Procédé de fabrication d'un composant horloger selon l'une des revendications précédentes, **caractérisé en ce que** le composant horloger est parmi un ressort, un levier-ressort, un sautoir, une ancre, une roue, un râteau, un balancier, une came, un engrenage ou un pont.

**11.** Composant horloger électroformé, **caractérisé en ce qu'**il est obtenu par un procédé de fabrication selon l'une des revendications précédentes, **en ce qu'**il comprend un alliage d'au moins deux éléments distincts, le premier élément étant le nickel, selon une proportion en poids comprise entre 91% et 99.8% inclus, et le deuxième élément, choisi parmi le Bore B, le Bismuth Bi, le Calcium Ca, l'Indium In, le Manganèse Mn, l'étain Sn ou le Zirconium Zr, se trouvant dans une proportion en poids comprise entre 0.2 et 6% inclus, voire entre 0.2 et 4% inclus et **caractérisé en ce que** l'alliage comprend au moins un flanc d'épaisseur supérieure ou égale à 50 microns et occupe toute l'épaisseur du composant horloger.

**12.** Composant horloger électroformé selon la revendication précédente, **caractérisé en ce qu'**il comprend un troisième élément, différent des deux premiers, sélectionné parmi le Fer Fe, le Chrome Cr, le Cobalt Co, le Palladium Pd, le Platine Pt, le Manganèse Mn, le Zinc Zn, le Cuivre.

**13.** Composant horloger électroformé selon la revendication 11 ou 12, **caractérisé en ce qu'**il comprend un alliage consistant en du nickel, ledit deuxième élément, notamment du phosphore P, et éventuellement un troisième élément.

**14.** Composant horloger électroformé selon l'une des revendications 11 à 13, **caractérisé en ce que** ledit alliage ne comprend pas de Bore et/ou pas de Thallium.

**15.** Composant horloger électroformé selon l'une des revendications 11 à 14, **caractérisé en ce qu'**il est un ressort, un levier-ressort, un sautoir, une ancre, une roue, un râteau, un balancier, une came, un engrenage, ou un pont.

**16.** Mouvement horloger ou sous-partie de pièce d'horlogerie, **caractérisé en ce qu'**il comprend un composant horloger selon l'une des revendications 11 à 15.

**17.** Pièce d'horlogerie, notamment montre, **caractérisée en ce qu'**elle comprend un composant horloger selon l'une des revendications 11 à 15.

## Fig. 1

## Fig. 2

## Fig. 3

|  | Rp0.2 [MPa] | E [GPa] |
|---|---|---|
| (2) [-] | 1500 | 150 |
| (3) 300°C/30min | 2900 | 170 |
| (4) 450°C/10min | (-) | 180 |
| (5) 250°C/2h | 2600 | 170 |

Europäisches
Patentamt

European
Patent Office

Office européen
des brevets

# RAPPORT DE RECHERCHE EUROPEENNE

Numéro de la demande

**EP 22 21 3707**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | FR 2 202 953 A1 (IBM [US]) 10 mai 1974 (1974-05-10) * exemples 11, 12 * * page 3, lignes 20-22 * * tableau 2 * ----- | 1-17 | INV. C25D7/00 C25D3/56 C25D5/50 |
| A | WO 02/34964 A1 (AHC OBBERFLAECHENTECHNIK GMBH [DE]; HOLLAENDER ALFONS [DE] ET AL.) 2 mai 2002 (2002-05-02) * abrégé * * page 1, lignes 24-26 * * page 3, lignes 11-16 * * revendication 1 * * tableau * ----- | 1-17 | |

**DOMAINES TECHNIQUES RECHERCHES (IPC)**

**C25D**

Le présent rapport a été établi pour toutes les revendications

| Lieu de la recherche | Date d'achèvement de la recherche | Examinateur |
|---|---|---|
| La Haye | 27 février 2023 | Lange, Ronny |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

......................................................................
& : membre de la même famille, document correspondant

EPO FORM 1503 03.82 (P04C02)

**EP 4 166 695 A1**

## ANNEXE AU RAPPORT DE RECHERCHE EUROPEENNE
## RELATIF A LA DEMANDE DE BREVET EUROPEEN NO.

EP 22 21 3707

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

27-02-2023

| Document brevet cité au rapport de recherche | Date de publication | Membre(s) de la famille de brevet(s) | Date de publication |
|---|---|---|---|
| FR 2202953 A1 | 10-05-1974 | FR 2202953 A1 | 10-05-1974 |
| | | JP S535851 B2 | 02-03-1978 |
| | | JP S49103845 A | 01-10-1974 |
| WO 0234964 A1 | 02-05-2002 | AT 350511 T | 15-01-2007 |
| | | AU 2050002 A | 06-05-2002 |
| | | CA 2432333 A1 | 02-05-2002 |
| | | DE 10052960 A1 | 16-05-2002 |
| | | EP 1330558 A1 | 30-07-2003 |
| | | HU 0301340 A2 | 29-09-2003 |
| | | JP 4023796 B2 | 19-12-2007 |
| | | JP 2004512429 A | 22-04-2004 |
| | | US 2004007472 A1 | 15-01-2004 |
| | | WO 0234964 A1 | 02-05-2002 |

EPO FORM P0460

Pour tout renseignement concernant cette annexe : voir Journal Officiel de l'Office européen des brevets, No.12/82

## RÉFÉRENCES CITÉES DANS LA DESCRIPTION

**Documents brevets cités dans la description**

- US 20140269228 A